# EUROPEAN PATENT SPECIFICATION

(11) **EP 3 393 895 B1**
(45) Date of publication and mention of the grant of the patent: **14.07.2021**
(21) Application number: 16879446.9
(22) Date of filing: 21.12.2016
(51) Int. Cl.: B62H 5/00, B62H 5/20, G08G 1/00, H04W 4/02, H04W 4/38, B60R 25/00, B62K 19/40, H04L 29/08

(54) **TRACKING UNIT FOR A HUMAN-POWERED VEHICLE**
VERFOLGUNGSEINHEIT FÜR EIN DURCH MENSCHENKRAFT BETRIEBENES FAHRZEUG
UNITÉ DE POURSUITE POUR VÉHICULE À PROPULSION HUMAINE

(30) Priority: 22.12.2015 NO 20151780
(43) Date of publication of application: 31.10.2018
(73) Proprietor: Bikefinder AS, 4014 Stavanger (NO)
(72) Inventor: ØLMHEIM, Ole Martin, 4021 Stavanger (NO); BRODAHL, Erik, 4316 Sandnes (NO)
(74) Representative: Håmsø Patentbyrå AS
(86) International application number: PCT/NO2016/050264
(87) International publication number: WO 2017/111612

(56) References cited:
- DE-A1-102005 001 209
- GB-A- 2 492 742
- US-A1- 2013 150 028
- US-A1- 2014 109 631
- SHYSPY Installation, 25 October 2015 (2015-10-25), XP055556598, Retrieved from the Internet: URL:https://web.archive.org/web/2015102503 5229/ http://www.bikecommuters.com/20 14/02/24/kickstarter-love-shy-spy-gpsgsm-t racker-for-bicycles

## Description

The present invention relates to a tracking unit for a human-powered vehicle, the human-powered vehicle comprising a frame. The tracking unit comprises a tracker, such as a GPS unit and/or a GSM unit, and an antenna. The invention also relates to a human-powered vehicle comprising the tracking unit. Said human-powered vehicle may be a bicycle.

Theft of human-powered vehicles, such as bicycles, is a large and increasing problem. Expensive bicycles have even been reported to be the aim of organized criminals. One possible countermeasure to the increasing problem is to install tracking units in said vehicles. Said tracking units rely on antennas for communicating with other devices.

Tracking units for bicycles that use GPS and/or GSM trackers are known. US2013150028 has addressed the issue of facilitating communication by configuring the water bottle rack to enclose the antenna. This solution has several drawbacks, such as that not all human-powered vehicles are equipped with water bottle racks. In some cases, such as for downhill bikes, having a water bottle rack might not be practical. Owners of human-powered vehicles might also not want a water bottle rack for aesthetic reasons. US 2014/109631 A1 discloses an anti-theft/tracking device for a bicycle lock.

The invention has for its object to remedy or to reduce at least one of the drawbacks of the prior art, or at least provide a useful alternative to prior art.

The object is achieved through features, which are specified in the description below and in the claims that follow.

The invention is defined by a tracking unit according to claim 1. The dependent claims define advantageous embodiments of the invention.

In a first aspect, the invention relates to a tracking unit for a human-powered vehicle. The human-powered vehicle comprises a frame. The tracking unit comprises a tracker, such as a GPS unit and/or a GSM unit (inside the frame), and an antenna. Said tracking unit further comprises a wire adapted to extend from the tracker, through a hole below a crank in the frame of said human-powered vehicle, to an antenna adapted to be mounted externally on said frame at or near said hole. The tracking unit is adapted to be placed inside the frame of the human-powered vehicle.

The tracking unit according to the present invention aims at offering a better antenna solution for a tracking unit, compared to the prior art. An antenna mounted externally on the frame at or near a hole below the crank has several advantages:
- There may not be a need for new holes in the frame for a wire to extend through from an internally placed tracker to an externally mounted antenna, as the hole below the crank can be used for this purpose.
- Proximity from the hole to the antenna means that the part of the antenna extending on the exterior of the frame may be small, making it less exposed to tampering by an evil-doer.
- The area by the crank may be relatively hard to reach for an evil-doer seeking to tamper with the antenna or the wire, compared to alternatives such as a bottle rack or the seat.

Adding more alternative positions to place an antenna to the art may in itself have advantages, as it may be harder for an evil-doer to find an antenna on a bike protected by a tracking unit if there are several possible alternative antenna positions to check. If it takes more time for the evil-doer on average to find an antenna to disable a tracking unit, the risk involved in stealing a human-powered vehicle will increase. Furthermore, a solution with an antenna under the crank may be particularly advantageous as it may be more time consuming and cumbersome to check that location than other known alternative locations, such as in, at or under a water bottle rack or a seat. The seat and the water bottle rack of a standing bicycle are positions more available to an evil-doer compared to a position near the crank, both visually and for using hands to feel for or try to disable an antenna.

The tracking unit, when installed in a human-powered vehicle, may be protected from tampering by at least partly protecting parts of the tracking unit that are not enclosed by a frame. This may be done by a layer of protective material, or by using fastening means of protective material. The protective material may be a two-component epoxy material, a polyurethane, a polycarbonate, a nitrogen based thermoset polymer, a ceramic material, a thermoplastic two-component material or a mouldable bulletproof material. Protecting the tracking unit's external parts with protective material protects the tracking unit's ability to communicate from being disabled. By protecting the tracking unit it will become harder and more time-consuming for any evil-doer to disable the tracking unit.

The tracking unit may also comprise a backup battery for providing the tracking unit with power in situations wherein other power sources are disabled, not functioning or not present. A backup energy source will reduce the tracking unit's downtime; time during which the tracking unit is not working as intended. The tracking unit is working as intended if it is consistently monitoring and communicating the human-powered vehicle's position.

The tracking unit may also comprise a motion detection means, such as an accelerometer, a tilt sensor and/or a gyroscope, for detecting movement, wherein the tracking unit is configured for conditional deactivation of the tracking unit when no movement is detected. In an embodiment comprising motion detection means, the term working as intended will refer to a situation where the tracking unit is consistently monitoring and communicating a human-powered vehicle's position unless the tracking unit is temporarily deactivated by the lack of movement registered by the motion detection means. A tracking unit comprising motion detection means is advantageous because deactivation of the tracking unit during standstill will reduce power consumption and thereby increase battery lifetime.

Furthermore, the tracking unit may also comprise an expansion device for securely fastening the tracking unit by expansion internally in a human-powered vehicle frame. By securely fastening the tracking unit it may be kept from moving relative to the frame. Keeping the tracking unit from moving relative to the frame may be advantageous, as such movement may cause damage to the tracking unit, to connections between parts of the tracking unit, or to the frame.

In a second aspect the invention relates to a human-powered vehicle comprising the tracking unit according to the first aspect of the invention.

The term underside refers to the side of the human-powered vehicle facing the ground when the human-powered vehicle is in normal use, internal and internally refers to in a cavity on the inside of the frame of the human-powered vehicle, and external and externally refers to the outside of the frame of the human-powered vehicle.

In one embodiment the antenna may be mounted on the underside of the frame of the human-powered vehicle, where it may be mounted using two holes for holding a battery and a junction box. This embodiment requires that the human-powered vehicle comprises two holes as described.

A second possible embodiment of the invention has the antenna placed on the underside of the frame of the human-powered vehicle, where it may be mounted using a drainage hole under a crank. This embodiment requires that the human-powered vehicle comprises a drainage hole under a crank.

In a third embodiment, the antenna may be built into a plastic gear wire guide on the underside of the frame of the human-powered vehicle, where the gear wires extends from internally to externally on the frame. This may be a particularly advantageous embodiment, as the plastic gear wire guide offers tamper protection by hiding the antenna for an evil-doer.

In a fourth embodiment, the antenna may be placed on the upper side of a lower part of the frame of the human-powered vehicle. By upper side is meant the side facing away from the ground when the human-powered vehicle is in normal use. In this embodiment, mounting holes in the frame for mounting a battery may be used for mounting the antenna. This embodiment requires that the human-powered vehicle comprises such mounting holes, or other means for mounting the antenna to the frame in such a position.

In embodiments comprising an antenna mounted on the underside of the frame of a human-powered vehicle, the antenna is preferably mounted in such a way that it has a minimum angle relative to the ground. An angle is preferred for the antenna to send and/or receive signals of sufficient quality consistently enough for the tracking unit to work as intended.

It is further preferred, for all embodiments which comprises an antenna mounted on the exterior of the frame, that the antenna protrudes from the frame to ensure that signals of sufficient quality can be sent from and/or received by the antenna consistently enough for the tracking unit to work as intended.

The human-powered vehicle may comprise an electric gear shifter, and a battery coupled to the electric gear shifter for supplying power thereto. In an embodiment the battery may further be coupled to the tracking unit for supplying power thereto. Using an already existing battery solution is advantageous, as it saves cost, weight and space by not requiring a dedicated battery exclusively for the tracking unit to be added.

The human-powered vehicle may be partly electrically powered, in which case it will comprise an electric motor and a power source for the electric motor. The power source for the electric motor may be the power source for the tracking unit.

In a third aspect the invention relates to a bicycle comprising the tracking unit according to the second aspect of the invention.

In a fourth aspect, the invention relates to a tracking unit comprising a tracker such as a GPS and/or a GSM unit, the tracking unit further comprising an antenna, the tracking unit being arranged to receive power from a power supply, wherein the tracking unit is arranged to be placed on the exterior of a frame. The tracking unit may comprise the power supply. The power supply may be a battery. The tracking unit may be configured to receive power from a power source for an electric motor for a partly electrically powered human-powered vehicle or from a power supply for an electric gear shifter.

The tracking unit according to the fourth aspect of the invention may be arranged to be fastened to the frame of a human-powered vehicle by use of bracket placed on the inside of the frame and connection means extending from the tracking unit through a hole in the frame. The tracking unit may be fastened to the frame by other means, such as by use of a glue, by welding or by any other means suitable for the purpose.

In a fifth aspect, the invention relates to a human-powered vehicle comprising the tracking unit according to the fourth aspect of the invention, wherein the tracking unit is placed on the exterior of the frame of the human-powered vehicle in close proximity to the crank. The tracking unit may be placed within 15 centimetres of the crank, more preferably it may be placed within 10 centimetres of the crank, even more preferably it may be placed within 5 centimetres of the crank. Having the tracking unit placed in close proximity to the crank is advantageous, as this area of a human-powered vehicle comprises equipment that may block the view of an evil-doer, making it harder to spot a tracking unit. The equipment in the area may also make it harder for an evil-doer to tamper with the tracking unit. To get a good look at the area around the crank, or to tamper with a tracking unit spotted in the area, an evil doer may have to bend, kneel or sit down, which may make his actions look more suspicious and which may increase the risk of the evil doer getting spotted and apprehended for doing something illegal.

In the following is described an example of a preferred embodiment illustrated in the accompanying drawings, wherein:

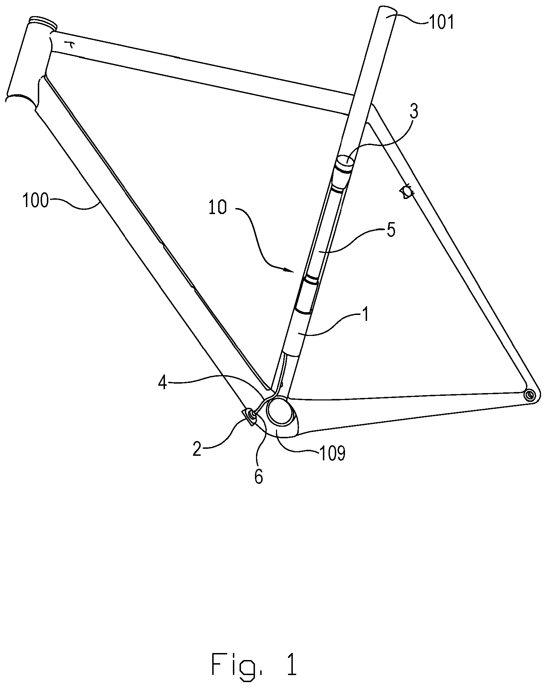

- Fig. 1: shows a bicycle frame provided with an embodiment of the tracking unit in accordance with the invention.

In said preferred embodiment, illustrated in figure 1, a tracking unit 10 is enclosed inside a bicycle frame 100, with an opening 101 in the top of the frame 100 and a further opening 109 in the bottom of the frame 100. The tracking unit 10 comprises a tracker 1 in the form of a GPS unit, an expansion mechanism 3, a battery 5, and a wire 4 extending from the tracker to an antenna 2 mounted on the exterior of the frame 100. Said wire 4 extends from the tracker 1 inside the frame 100 to the externally mounted antenna 2 through a hole 6 in the frame 100.

The parts of the tracking unit 10 provided inside of the frame 100, can be inserted through the opening in the top of the frame 101 and/or inserted through the bottom of the frame 109. The tracker 1 can be positioned above or below the battery 5. By above is meant closer to the top hole 101 in the frame 100, by below is meant closer to the bottom hole 109 in the frame 100.

In the shown embodiment the expansion mechanism 3 is positioned at the top of the tracking unit 10, with the result that no wiring has to pass by the expansion mechanism 3. The tracker 1 is mounted close to or directly below the battery 5, meaning little to no wiring is needed between the tracker 1 and the battery 5. The tracker 1 is furthermore placed close to the hole 6 on the underside of the frame, meaning that wire 4 may be short, and that little work is needed to connect the tracker 1 to the antenna 2.

In the claims, any reference signs placed between parentheses shall not be construed as limiting the claim.

## Claims

1. Tracking unit (10) for a human-powered vehicle, the human-powered vehicle comprising a frame (100), the tracking unit comprising a tracker (1), such as a GPS and/or GSM unit, and an antenna (2) for allowing the tracker (1) to communicate with a receiver, wherein
- said tracker (1) is placed inside the frame (100) of a human-powered vehicle; and
- said tracking unit (10) includes a wire (4) extending from the tracker (1), through a hole (6) below a crank in the frame (100), to the antenna (2) mounted externally on said frame (100) at or near said hole (6).

2. Tracking unit (10) according claim 1, wherein parts of the tracking unit (10) not enclosed by a frame (100) are at least partly protected by a tamper protection layer comprising a material, such as a thermoplastic two-component material or a ceramic material.

3. Tracking unit (10) according to any one of the previous claims, the tracking unit (10) comprising a backup battery for providing power for the tracking unit (10) when other power sources are disabled, not functioning or unavailable.

4. Tracking unit (10) according to any one of the previous claims, the tracking unit (10) comprising a motion detection means, such as an accelerometer and/or a gyroscope, for detecting movement, wherein the tracking unit (10) is configured for conditional deactivation of the tracking unit (10) when no movement is detected.

5. Tracking unit (10) according to any one of the previous claims, the tracking unit (10) comprising an expansion device (3) for securely fastening the tracking unit by expansion within a cavity in a human-powered vehicle's frame (100).

6. Human-powered vehicle comprising the tracking unit (10) according to any one of the previous claims.

7. Human-powered vehicle according to claim 6, wherein the antenna (2) is mounted on an underside of the frame (100) of the human-powered vehicle, wherein the antenna (2) is mounted using two holes for holding a battery and a junction box.

8. Human-powered vehicle according to claim 6, wherein the antenna (2) is mounted on an underside of the frame (100) of the human-powered vehicle, and wherein the antenna (2) is mounted using a drainage hole under a crank.

9. Human-powered vehicle according to claim 6, wherein the antenna (2) is adapted to be built into a plastic gear wire guide on an underside of the frame (100) of the human-powered vehicle.

10. Human-powered vehicle according to claim 6, wherein the antenna (2) is mounted on a upper side of a lower part of the frame (100) of the human-powered vehicle, wherein the antenna (2) is mounted using holes in the frame for mounting a battery.

11. Human-powered vehicle according to any one of the claims 6-10, wherein the antenna (2) has a minimum angle relative to the ground.

12. Human-powered vehicle according to any one of the claims 6-11, wherein the antenna (2) protrudes from the frame (100).

13. Human-powered vehicle according to any one of the claims 6-12, wherein the human-powered vehicle comprises an electric gear shifter and a battery (5), wherein the battery (5) is coupled to the gear shifter for supplying power thereto, and wherein the battery (5) is coupled to the tracking unit (10) for supplying power thereto.

14. Human-powered vehicle according to any one of the claims 6-13, wherein the human-powered vehicle comprises a bicycle.

15. A bicycle frame (100) comprising a tracking unit (10) according to claim 1, the frame (100) having an opening (101) in a top of the frame (100), a further opening (109) in a bottom of the frame (100), and a hole (6) under a crank of the frame (100) the tracking unit (10) further comprising an expansion mechanism (3) and a battery (5).

16. The bicycle frame (100) according to claim 15, wherein the tracking unit (10) comprises the antenna (2), and wherein the antenna (2) is placed at said hole (6).

## Patentansprüche

1. Verfolgungseinheit (10) für ein durch Menschenkraft angetriebenes Fahrzeug, wobei das durch Menschenkraft angetriebene Fahrzeug einen Rahmen (100) umfasst, wobei die Verfolgungseinheit einen Tracker (1), wie eine GPS- und/oder GSM-Einheit, und eine Antenne (2), die es dem Tracker (1) ermöglicht, mit einem Empfänger zu kommunizieren, umfasst, wobei
- der Tracker (1) im Inneren des Rahmens (100) eines von Menschenkraft angetriebenen Fahrzeugs angeordnet ist; und
- der Tracker (10) einen Draht (4) umfasst, der sich von dem Tracker (1) durch ein Loch (6) unterhalb einer Kurbel im Rahmen (100), zur Antenne (2), die aussen am Rahmen (100) an oder in der Nähe des Lochs (6) angebracht ist, erstreckt.

2. Verfolgungseinheit (10) nach Anspruch 1, wobei Teile der Verfolgungseinheit (10), die nicht von einem Rahmen (100) umschlossen sind, zumindest teilweise durch eine Manipulationsschutzschicht geschützt sind, die ein Material, wie z.B. ein thermoplastisches Zweikomponentenmaterial oder ein Keramikmaterial, umfasst.

3. Verfolgungseinheit (10) nach einem der vorhergehenden Ansprüche, wobei die Verfolgungseinheit (10) eine Pufferbatterie zur Bereitstellung von Energie für die Verfolgungseinheit (10) umfasst, wenn andere Energiequellen deaktiviert sind, nicht funktionieren oder nicht verfügbar sind.

4. Verfolgungseinheit (10) nach einem der vorhergehenden Ansprüche, wobei die Verfolgungseinheit (10) eine Bewegungserfassungseinrichtung, wie einen Beschleunigungsmesser und/oder ein Gyroskop, zur Erfassung von Bewegung umfasst, wobei die Verfolgungseinheit (10) zur bedingten Deaktivierung der Verfolgungseinheit (10) ausgebildet ist, wenn keine Bewegung erfasst wird.

5. Verfolgungseinheit (10) nach einem der vorhergehenden Ansprüche, wobei die Verfolgungseinheit (10) eine Erweiterungsvorrichtung (3) zur sicheren Befestigung der Verfolgungseinheit durch Erweitern innerhalb eines Hohlraums im Rahmen (100) eines durch Menschenkraft angetriebenen Fahrzeugs aufweist.

6. Von Menschenkraft angetriebenes Fahrzeug umfassend die Verfolgungseinheit (10) nach einem der vorhergehenden Ansprüche.

7. Von Menschenkraft angetriebenes Fahrzeug nach Anspruch 6, wobei die Antenne (2) an einer Unterseite des Rahmens (100) des von Menschenkraft angetriebenen Fahrzeugs angebracht ist, wobei die Antenne (2) unter Verwendung zweier Löcher zur Aufnahme einer Batterie und einer Anschlussdose angebracht ist.

8. Von Menschenkraft angetriebenes Fahrzeug nach Anspruch 6, wobei die Antenne (2) an einer Unterseite des Rahmens (100) des von Menschenkraft angetriebenen Fahrzeugs angebracht ist, und wobei die Antenne (2) unter Verwendung eines Abflusslochs unter einer Kurbel angebracht ist.

9. Von Menschenkraft angetriebenes Fahrzeug nach Anspruch 6, wobei die Antenne (2) zum Einbau in eine Kunststoff-Getriebedrahtführung an einer Unterseite des Rahmens (100) des von Menschenkraft angetriebenen Fahrzeugs ausgebildet ist.

10. Von Menschenkraft angetriebenes Fahrzeug nach Anspruch 6, wobei die Antenne (2) an einer Oberseite eines unteren Teils des Rahmens (100) des von Menschenkraft angetriebenen Fahrzeugs angebracht ist, wobei die Antenne (2) unter Verwendung von Löchern im Rahmen zur Montage einer Batterie angebracht ist.

11. Von Menschenkraft angetriebenes Fahrzeug nach einem der Ansprüche 6-10, wobei die Antenne (2) einen minimalen Winkel relativ zum Boden aufweist.

12. Von Menschenkraft angetriebenes Fahrzeug nach einem der Ansprüche 6-11, wobei die Antenne (2) aus dem Rahmen (100) herausragt.

13. Von Menschenkraft angetriebenes Fahrzeug nach einem der Ansprüche 6-12, wobei das von Menschenkraft angetriebene Fahrzeug einen elektrischen Gangschalter und eine Batterie (5) umfasst, wobei die Batterie (5) mit dem Gangschalter gekoppelt ist, um diesen mit Strom zu versorgen, und wobei die Batterie (5) mit der Verfolgungseinheit (10) gekoppelt ist, um diese mit Strom zu versorgen.

14. Von Menschenkraft angetriebenes Fahrzeug nach einem der Ansprüche 6-13, wobei das von Menschenkraft angetriebene Fahrzeug ein Fahrrad umfasst.

15. Fahrradrahmen (100) umfassend eine Verfolgungseinheit (10) nach Anspruch 1, wobei der Rahmen (100) eine Öffnung (101) in einer Oberseite des Rahmens (100), eine weitere Öffnung (109) in einer Unterseite des Rahmens (100), und ein Loch (6) unter einer Kurbel des Rahmens (100) hat, wobei die Verfolgungseinheit (10) weiter einen Expansionsmechanismus (3) und eine Batterie (5) umfasst.

16. Fahrradrahmen (100) nach Anspruch 15, wobei die Verfolgungseinheit (10) die Antenne (2) umfasst, und wobei die Antenne (2) an dem Loch (6) angeordnet ist.

## Revendications

1. Unité de suivi (10) pour un véhicule à propulsion humaine, le véhicule à propulsion humaine comprenant un cadre (100) et une unité de suivi comprenant un dispositif de suivi (1), tel qu'un GPS et / ou une unité GSM, et une antenne (2) pour permettre au dispositif de suivi (1) de communiquer avec un récepteur, dans laquelle
- ledit dispositif de suivi (1) est placé à l'intérieur du cadre (100) d'un véhicule à propulsion humaine; et
- ladite unité de suivi (10) comprend un fil (4) s'étendant depuis le dispositif de suivi (1), à travers un trou (6) situé en dessous d'une manivelle dans le cadre (100), jusqu'à l'antenne (2) montée sur l'extérieur dudit cadre (100) ou à proximité dudit trou (6).

2. Unité de suivi (10) selon la revendication 1, dans laquelle des parties de l'unité de suivi (10) qui ne sont pas enfermées par un cadre (100) sont au moins partiellement protégées par une couche de protection contre les altérations comprenant un matériau, tel qu'un matériau thermoplastique à deux composants ou un matériau céramique.

3. Unité de suivi (10) selon l'une quelconque des revendications précédentes, l'unité de suivi (10) comprenant une batterie de secours pour fournir de l'énergie à l'unité de suivi (10) lorsque d'autres sources d'énergie sont désactivées, ne fonctionnent pas ou ne sont pas disponibles.

4. Unité de suivi (10) selon l'une quelconque des revendications précédentes, l'unité de suivi (10) comprenant un moyen de détection de mouvement, tel qu'un accéléromètre et / ou un gyroscope, pour détecter un mouvement, dans laquelle l'unité de suivi (10) est configurée pour la désactivation conditionnelle de l'unité de suivi (1 0) lorsqu'aucun mouvement n'est détecté.

5. Unité de suivi (10) selon l'une quelconque des revendications précédentes, l'unité de suivi (10) comprenant un dispositif d'extension (3) pour fixer solidement l'unité de suivi par expansion à l'intérieur d'une cavité dans le cadre d'un véhicule à propulsion humaine (100).

6. Véhicule à propulsion humaine comprenant l'unité de suivi (10) selon l'une quelconque des revendications précédentes.

7. Véhicule à propulsion humaine selon la revendication 6, dans lequel l'antenne (2) est montée sur une face inférieure du cadre (100) du véhicule à propulsion humaine, dans lequel l'antenne (2) est montée en utilisant deux trous pour maintenir une batterie et un boîte de jonction.

8. Véhicule à propulsion humaine selon la revendication 6, dans lequel l'antenne (2) est montée sur une face inférieure du cadre (100) du véhicule à propulsion humaine, et dans lequel l'antenne (2) est montée en utilisant un trou de drainage sous une manivelle.

9. Véhicule à propulsion humaine selon la revendication 6, dans lequel l'antenne (2) est adaptée pour être intégrée dans un guide-câble de vitesse en plastique sur une face inférieure du cadre (100) du véhicule à propulsion humaine,

10. Véhicule à propulsion humaine selon la revendication 6, dans lequel l'antenne (2) est montée sur un côté supérieur d'une partie inférieure du cadre (100) du véhicule à propulsion humaine, dans lequel l'antenne (2) est montée en utilisant des trous dans le cadre pour le montage d'une batterie.

11. Véhicule à propulsion humaine selon l'une quelconque des revendications 6 à 10, dans lequel l'antenne (2) a un angle minimum par rapport au sol.

12. Véhicule à propulsion humaine selon l'une quelconque des revendications 6 à 11, dans lequel l'antenne (2) fait saillie du cadre (100).

13. Véhicule à propulsion humaine selon l'une quelconque des revendications 6 à 12, dans lequel le véhicule à propulsion humaine comprend un levier de vitesses électrique et une batterie (5), dans lequel la batterie (5) est couplée au levier de vitesses pour lui fournir de l'énergie, et dans lequel la batterie (5) est couplée à l'unité de suivi (10) pour lui fournir de l'énergie.

14. Véhicule à propulsion humaine selon l'une quelconque des revendications 6 à 13, dans lequel le véhicule à propulsion humaine est une bicyclette.

15. Un cadre de bicyclette (100) comprenant une unité de suivi (10) selon la revendication 1, the cadre (100) ayant une ouverture (101) dans le sommet du cadre (100), une ouverture supplémentaire (109) dans un fond du cadre (100), et un trou (6) en dessous d'une manivelle du cadre (100), l'unité de suivi (10) comprenant en outre un mécanisme d'expansion (3) et une batterie (5).

16. Le cadre de bicyclette (100) selon la revendication 15, dans lequel l'unité de suivi (10) comprend une antenne (2), et dans lequel l'antenne (2) est placée au niveau dudit trou (6).
